# EUROPEAN PATENT APPLICATION

(11) **EP 2 139 283 A1**
(43) Date of publication of application: **30.12.2009**
(21) Application number: 08305155.7
(22) Date of filing: 06.05.2008
(51) Int. Cl.: H04W 36/14

(54) **Handover procedure between radio access networks**

(71) Applicant: Motorola, Inc., A Corporation of the State of Delaware, Schaumburg, IL 60196 (US)
(72) Inventor: Bavois, Loic, 31270, Frouzins (FR); Parron, Jérôme, 31100, TOULOUSE (FR)
(74) Representative: Delumeau, François Guy

(57) **Abstract**

A generic access network infrastructure controller entity (400) including a controller communicably coupled to a signal transceiver. The controller is configured to send a handover failure message to a dual-mode wireless communication subscriber terminal in response to a handover request received at the transceiver wherein the handover failure message indicates that handover from the unlicensed mobile access network to the radio access network is currently not possible. The entity may also send a time value to the dual-mode wireless communication subscriber terminal in response to the handover request, wherein the time value indicate when the dual-mode wireless communication subscriber terminal may re-send the handover request.

## Description

### FIELD OF THE DISCLOSURE

The present disclosure relates generally to wireless communications and more particularly to handover procedures between radio access networks, for example, from an unlicensed mobile or generic access network to a cellular communication network.

### BACKGROUND

Unlicensed Mobile Access (UMA) technology provides UMA-enable subscriber devices access to GSM and GPRS mobile services over unlicensed spectrum technologies, for example, Bluetooth and 802.11. A Generic Access Network Controller (GANC) of the GAN authenticates and authorizes the subscriber device. Upon approval, a subscriber location update is performed and all mobile voice and data traffic is routed to the subscriber device via the GAN rather than the cellular radio access network (RAN). The subscriber device is thus able to roam and handover between a cellular RAN and a GAN without interruption of mobile voice and data services during the transition between networks.

In 3GPP, a subscriber device connected to a GAN initiates handover by sending a handover message or request. However, various circumstances may prevent the GAN from providing a handover command to the subscriber device including, among others, the lack of an available resource on a neighboring GSM cell or the lack of a neighboring PLMN supported by the subscriber device. Network maintenance and other technical issues on the neighboring GSM network may also adversely affect the ability of the GAN to provide a handover command to the requesting subscriber device. Moreover, under the current 3GPP specification the GAN is not required to reply to a handover request from the subscriber device. Meanwhile, the subscriber device may experience poor call or session quality. If the quality of the GAN link continues to deteriorate, the subscriber may ultimately drop the call or session. All the while, the subscriber may signal unnecessary handover messages to the GANC while waiting for a handover command from the GANC.

The various aspects, features and advantages of the disclosure will become more fully apparent to those having ordinary skill in the art upon careful consideration of the following Detailed Description thereof with the accompanying drawings described below. The drawings may have been simplified for clarity and are not necessarily drawn to scale.

### BRIEF DESCRIPTION OF THE DRAWINGS

FIG. 1 illustrates a wireless communication system including a RAN and GAN.
FIG. 2 illustrates a handover process flow diagram.
FIG. 3 illustrates a schematic block diagram of a subscriber device.
FIG. 4 illustrates a schematic block diagram of a network infrastructure controller entity.

### DETAILED DESCRIPTION

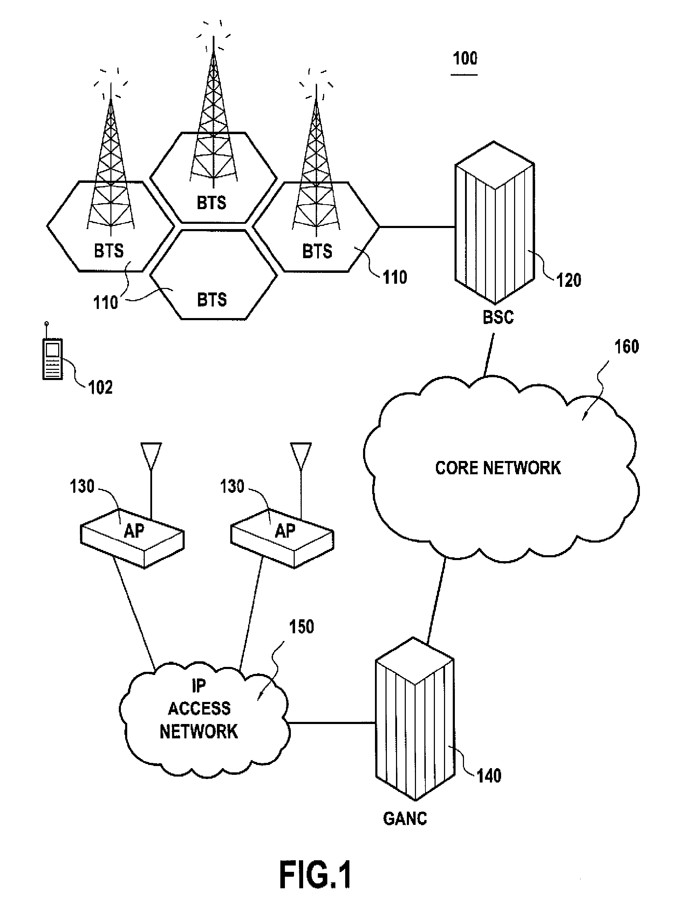

In FIG. 1, a wireless communication system 100 comprises a first radio access network (RAN) in the form of a cellular RAN comprising multiple base transceiver stations 110 communicably coupled to a base station controller (BSC) 120. A base transceiver station (BTS) may also be referred to as an access point, access terminal, base, base station, base unit, Node-B, eNode-B or by other terminology used in the art. More generally, the RAN may be implemented as a GSM or UMTS, CDMA, WiMAX or a future generation wireless communication technology protocol network. In some implementations, one or more cells of the RAN may constitute a location area (LA) or a routing area (RA) of a public land mobile network (PLMN). The RAN may be public or private and may operate on licensed or unlicensed spectrum.

The second radio access network includes multiple access points 130 communicably coupled to a generic access network controller (GANC) 140 via an IP based access network 150. In an alternative embodiment, the functionality of the access point and the GANC is performed by a single entity. The GAN may be implemented 802.11, Bluetooth or other protocol network. In some implementations, one or more access points or cells of the GAN may constitute a location area (LA) or a routing area (RA). The GAN may also be public or private and may also operate on licensed or unlicensed spectrum.

In FIG. 1, the RAN and the GAN, and particularly the BSC 120 and the GANC 140, are both communicably coupled to a core network 160. The core network provides authentication, switching and routing among various other functions well known to those having ordinary skill in the art. In FIG. 1, the RAN and GAN serve one or more of remote units, for example subscriber terminal 102, in within the serving area of the cell or access point. The remote units may be fixed units or mobile terminals. The remote units may also be referred to as subscribers, subscriber units, mobiles, mobile stations, users, terminals, user equipment (UE), terminals, or by other terminology used in the art. In some implementations, the mobile terminal is a dual-mode wireless communication subscriber terminal capable of communicating with the RAN and GAN.

As the mobile terminal moves about or as network conditions change, a dual-mode wireless communication subscriber terminal may handoff or handover from one network to another. In FIG. 1, for example, the dual-mode subscriber device 102 may handover between the GAN and RAN. Handover may be prompted by various conditions, which may be monitored by the subscriber device and/or by elements of the RAN or GAN. For example, handover from the RAN to the GAN may be made when the signal quality is poor. The subscriber device may also handover from the RAN to the GAN when the GAN is available, for example, to reduce air time costs associated with the use of RAN. A subscriber terminal communicating on the GAN may attempt to handover over to a RAN when the link quality on the GAN is poor. Handover from the GAN to the RAN may also be prompted when received real time control protocol (RTCP) packets indicate poor uplink quality or when there is excessive loss or delay in the received RTP packets. The subscriber device may also handover from the GAN to the RAN when a RAN is available, for example, when GSM or UMTS coverage is found. Handover may also be made from one network to the other reduce traffic in the network from which handover is made. In this latter instance, in some embodiments, the handoff may be initiated by the network.

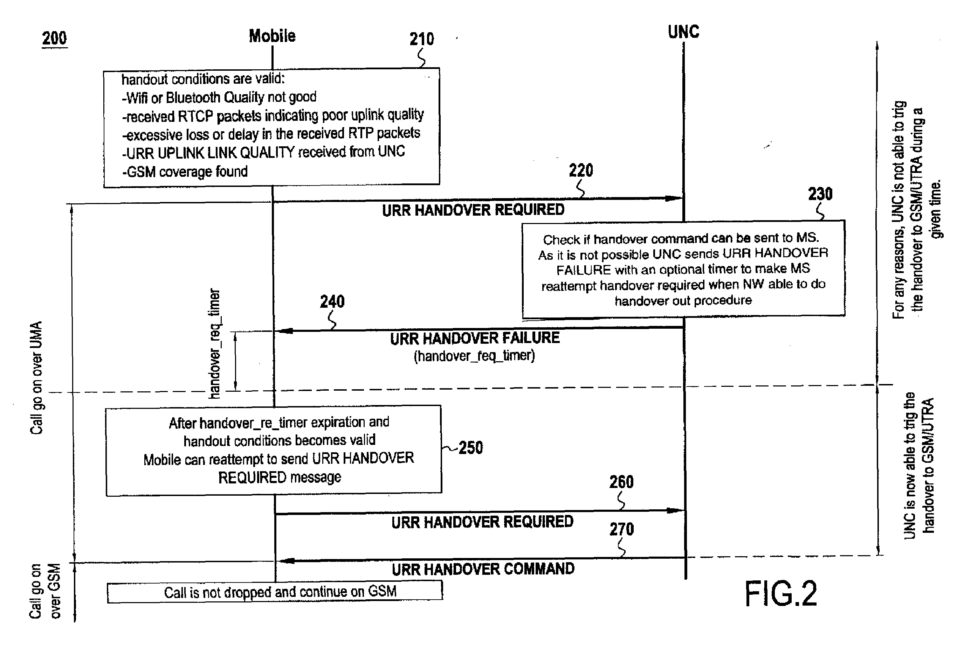

In the process 200 of FIG. 2, at 210, a subscriber device, or mobile, communicating on a GAN determines whether a condition, examples of which are discussed above, exists that would prompt handover from the GAN to the RAN. At 220, the mobile transmits a handover request to the GANC. At 230, the GANC determines whether handover is currently possible. If handover is possible, the GANC transmits a handover command to the mobile and the handover proceeds accordingly. In other instances however, the GANC may not be able to provide a handover command to the requesting subscriber device for a variety of reasons. For example, there may be a lack of resources on neighboring radio access networks, or the signal quality on the neighboring network may not be any better than the signal quality available on the GAN. The neighboring RAN may be unavailable for maintenance and/or other technical reasons. If handover is not possible, the GANC transmits a handover failure message to the mobile at 240. The handover failure message indicates that handover from the unlicensed mobile access network to the radio access network is not possible, at least not currently.

In one implementation, the GANC sends timing information to the subscriber device in response to the handover request. The timing information is used by the mobile to determine when the mobile can or should re-send the handover request. In one embodiment, the timing information is sent with the handover failure message. More generally however, this information may be sent in a separate message in response to the handover request. In FIG. 2, at 250, the mobile runs a timer based on the timing information and re-sends the handover request upon expiration of a timer provided that the handover prompting condition still exists. In one particular implementation, the GANC provide a time value used by the mobile to determine when to re-send the handover request. The time value may be determined based on a network congestion algorithm or it may be based upon some other criteria. In another implementation, the mobile re-sends the handover request without the benefit of timing information from the GANC. In this alternative embodiment, the mobile may re-send the handover request after the expiration of a timer using a local time value or based upon some other condition. At 260, the mobile re-sends the handover request, and a handover command is ultimately provided at 270.

The GANC provides timing information to the mobile in circumstances where the inability of the GANC to provide a handover command to the mobile is only temporary. In other circumstances, the inability of the GANC to provide a handover command may be more permanent, for example, where the RAN is unavailable for maintenance or for other technical reasons, or for lack of the existence of a RAN. Thus in some embodiments, the GANC provides a message in response to the handover request indicating that the dual-mode wireless communication subscriber terminal should not re-send the handover request. Such a message may be in the form of a flag or other indicator in the handover failure message. Alternatively, it may be sent as a separate message.

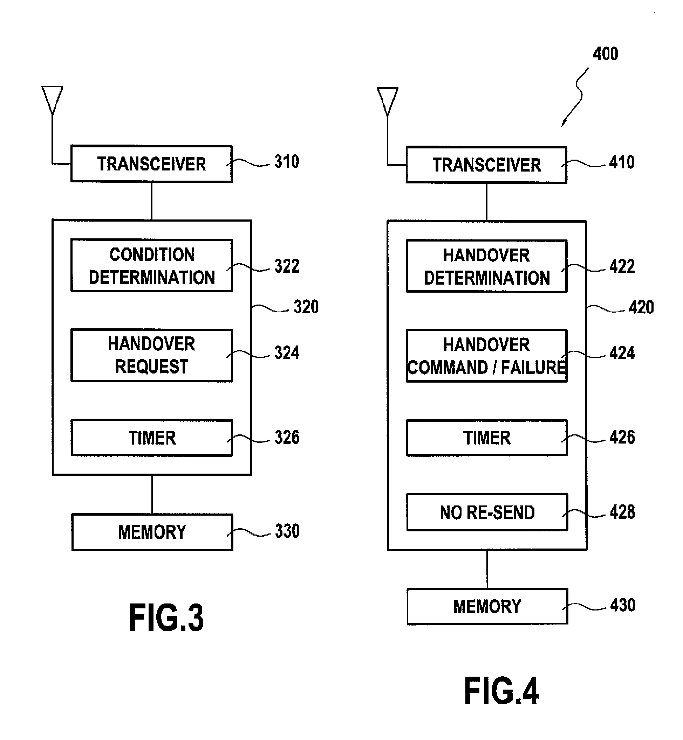

In FIG. 3, a dual-mode subscriber device 300 capable of communicating with a generic access network and a radio access network includes a radio transceiver 310 for communicating with the RAN and GAN. The transceiver is show as a single device but alternatively may be implemented as discrete devices. The transceiver is communicably coupled to a controller 320 couple to memory 330 that stores software or firmware controlling the functionality of the controller. At 322, the controller includes functionality, configurable under software control, to determine the existence of a condition prompting handover as discussed above. At 324, the controller includes functionality, configurable under software control, to cause the transceiver 310 to send a handover request to the GAN or RAN while communicating with the GAN or RAN upon satisfaction of the condition prompting handover as discussed above. At 326, the controller includes functionality, configurable under software control, to implement a timer the expiration of which may result in the retransmission of the handover request as discussed above. In one embodiment, the timer functionality is implemented upon receipt of timing information from GANC in response to a handover request.

In FIG. 4, a wireless network infrastructure controller entity, for example, a GANC, 400 comprises a signal transceiver 400 communicably coupled to a controller 420 that is communicably coupled to memory that stores software or firmware controlling the functionality of the controller. At 422 the controller includes functionality, configured under software control, to determine whether handover of the requesting dual-mode wireless communication subscriber terminal is possible as discussed above. At 424, the controller include functionality, configured under software control, to send a handover command or failure message to a dual-mode wireless communication subscriber terminal in response to a handover request received at the transceiver. At 426, the controller includes functionality, configured under software control, to send a time value to the dual-mode wireless communication subscriber terminal in response to a handover request received at the transceiver as discussed above. At 428, the controller includes functionality, configured under software control, to send a massage to the dual-mode wireless communication subscriber terminal instructing the terminal not to re-send the handover message as discussed above.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope and spirit of the inventions, which are to be limited not by the exemplary embodiments but by the appended claims.

## Claims

1. A method in a dual-mode wireless communication subscriber terminal capable of communicating with generic access network and a radio access network, the method comprising:
sending (220) a handover request to generic access network while communicating with the generic access network;
receiving (240) a handover failure message from the generic access network in response to sending the handover request,
the handover failure message indicating that handover from the generic access network to the radio access network is currently not possible.

2. The method of Claim 1, receiving timing information in response to sending the handover request, the timing information indicating when the subscriber terminal may re-send the handover request.

3. The method of Claim 1, re-sending (260) the handover request to the generic access network, after receiving the handover failure message, upon expiration of a time period.

4. The method of Claim 1,
receiving a time value with the handover failure message in response to sending the handover request, the time value indicating when the subscriber terminal should re-send the handover request,
resending the handover request to the generic access network upon expiration of a time period based on the time value.

5. The method of Claim 1, receiving an indication from the generic access network, in response to sending the handover request, not to re-send the handover request.

6. The method of Claim 1, sending the handover request to generic access network while communicating with the generic access network upon satisfaction of a condition prompting handover.

7. The method of Claim 6, re-sending the handover request to the generic access network, after receiving the handover failure message, only if the condition prompting handover is satisfied upon expiration of a time period.

8. A dual-mode wireless communication subscriber terminal (300) capable of communicating with a generic access network and a radio access network, the terminal comprising:
a radio transceiver (310) ;
a controller (320) communicably coupled to the radio transceiver,
the controller configured to cause the radio transceiver to transmit a handover request upon satisfaction of a condition while communicating on the generic access network,
the transceiver receiving a handover failure message from the unlicensed mobile access network in response to sending the handover request,
the handover failure message indicating that handover from the generic access network to the radio access network is currently not possible.

9. The terminal of Claim 8, the controller configured to cause the transceiver to re-send the handover request to the generic access network, after receiving the handover failure message, upon expiration of a time period.

10. The terminal of Claim 8, the controller configured to cause the transceiver to re-send the handover request to the generic access network upon expiration of a time period that is based on a time value received by the transceiver with the handover failure message.

11. The terminal of Claim 8, the controller configured not to re-send the handover request to the generic access network in response to a message received from the generic access network in respond to the handover request, the message indicating not to re-send the handover request.

12. The terminal of Claim 8, the controller configured to cause the transceiver to send the handover request to generic access network while communicating with the generic access network upon satisfaction of a condition prompting handover.

13. The terminal of Claim 12, the controller configured to cause the transceiver to re-send the handover request to the generic access network, after receiving the handover failure message, only if the condition prompting handover is satisfied upon expiration of a time period.

14. A generic access network infrastructure controller entity (400), comprising:
a signal transceiver (410);
a controller (420) communicably coupled to the signal transceiver,
the controller configured to send a handover failure message to a dual-mode wireless communication subscriber terminal in response to a handover request received at the transceiver,
the handover request is to handover from the generic access network to a radio access network,
the handover failure message indicative that handover from the unlicensed mobile access network to the radio access network is currently not possible.

15. The entity of Claim 14, the controller configured to cause the transceiver to send a time value to the dual-mode wireless communication subscriber terminal in response to the handover request, the time value indicating when the dual-mode wireless communication subscriber terminal may re-send the handover request.

16. The entity of Claim 14, the controller configured to cause the transceiver to send a time value with the handover failure message, the time value indicating when the dual-mode wireless communication subscriber terminal may re-send the handover request.

17. The entity of Claim 14, the controller configured to determine whether the radio access network is currently available for handover, the controller causing the transceiver to send the handover failure message only if the radio access network is not currently available.

18. The entity of Claim 14, the controller configured to send a message in response to the handover request indicating that the dual-mode wireless communication subscriber terminal should not re-send the handover request.
